# EUROPEAN PATENT SPECIFICATION

(11) **EP 3 878 739 B1**
(45) Date of publication and mention of the grant of the patent: **12.04.2023**
(21) Application number: 21167220.9
(22) Date of filing: 13.12.2018
(51) Int. Cl.: B64C 27/82, B63H 1/14, B64C 27/46, B64C 27/467

(54) **BIDIRECTIONAL AIRCRAFT ROTOR**
BIDIREKTIONALER FLUGZEUGROTOR
ROTOR D'AÉRONEF BIDIRECTIONNEL

(30) Priority: 01.11.2018 US 201816178349
(43) Date of publication of application: 15.09.2021
(62) Divisional of application: 18212490.9
(73) Proprietor: Textron Innovations Inc., Providence, Rhode Island 02903 (US)
(72) Inventor: ACEE, Aaron Alexander, Flower Mound, TX Texas 75022 (US); HALDEMAN, Andrew Paul, Fort Worth, TX Texas 76102 (US)
(74) Representative: Barker Brettell LLP

(56) References cited:
- EP-A1- 3 254 962
- EP-B1- 0 642 437
- WO-A1-93/24360
- FR-A- 411 538
- GB-A- 296 717
- US-A- 2 027 647
- US-A- 2 408 788
- US-A- 2 609 055
- US-A- 4 966 526
- US-A1- 2007 231 148

## Description

### Background

Conventional rotorcraft feature rotor systems that spin in a single direction. Rotor systems that rotate a single direction utilize rotor blades, or airfoils, specifically configured for a chordwise airstream passing over the rotor blades in a single direction. Conventional rotor blades typically feature a maximum thickness offset closer to a leading edge than the trailing edge, such as between a leading edge of the blade and about one-third of a chord length of the blade nearest the leading edge. The offset maximum thickness and/or camber of conventional airfoils is optimized to generate lift as the airfoil is rotated in a single "normal" direction. Conventional rotors typically operate at a relatively constant RPM and are pitch controlled, wherein their blades are rotated about a spanwise pitch axis to vary the amount of lift generated by the blades.

FR411538A discloses a propeller applicable to airplanes and airships, essentially characterized by the special shape of the blades allowing it to render its useful effect on the cylinder of air concentrated by said blades.

US4966526A discloses a circulation control rotor system for aircraft in which compressed air is directly supplied at generally constant pressure to plenums in the rotor blades and discharged through area controlled slots.

EP0642437A1 discloses a propeller which has blades each of which is pivotally arranged in the hub of the propeller so that the blade is capable of pivoting to and fro in an axial plane between forward and rearward positions. The blades are constructed such that each of the blade profiles, formed as the intersecting face between a cylinder face coaxial with a propeller and a blade, is symmetrical in a position between forward and rearward positions. EP3254962 discloses a helicopter anti-torque electric propulsion system comprising at least two yaw control computers connected to two pluralities of variable speed motors driving fixed-blade-pitch rotors for redundancy reasons.
In accordance with the invention as defined by the appended claims, there is provided a tail rotor for a rotor craft.

### Brief Description of the Drawings

Figure 1 is a side view of a rotorcraft according to this disclosure.
Figure 2 is an end view of a bidirectional rotor blade according to this disclosure.
Figure 3 is an example of a rotor blade not falling within the scope of the invention.
Figure 4 is a side view of another rotorcraft according to this disclosure.
Figure 5 is a partial side view of a tail boom comprising rotors according to this disclosure.
Figure 6 is a partial side view of another tail boom comprising rotors according to this disclosure.
Figure 7 is a partial side view of another tail boom comprising rotors according to this disclosure.

### Detailed Description

In this disclosure, reference may be made to the spatial relationships between various components and to the spatial orientation of various aspects of components as the devices are depicted in the attached drawings. However, as will be recognized by those skilled in the art after a complete reading of this disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

This disclosure describes a rotorcraft having rotors that can change a direction of their rotation and are utilized on rotor systems that vary RPM of the rotor. Changing the direction of a rotor's rotation requires rotor blades that are configured for relatively efficient operation in both directions. The bidirectional rotor blades feature a leading edge along with a trailing edge that are mirrors of each other along a median of the rotor blade. A profile of the leading edge of the rotor blade is identical to a profile of the trailing edge of the rotor blade.

A bidirectional rotor system will have to provide thrust when operated in both the forward direction, with a leading edge leading, and the negative direction, with the trailing edge leading, and an airfoil with a relatively sharp leading edge and a rounded trailing edge will provide lesser flow separation in both rotational directions. Bidirectional rotor systems also present a challenge in requiring the rotor to stop and change directions, but RPM-controlled rotors are typically designed to have reduced chord length and inertia.

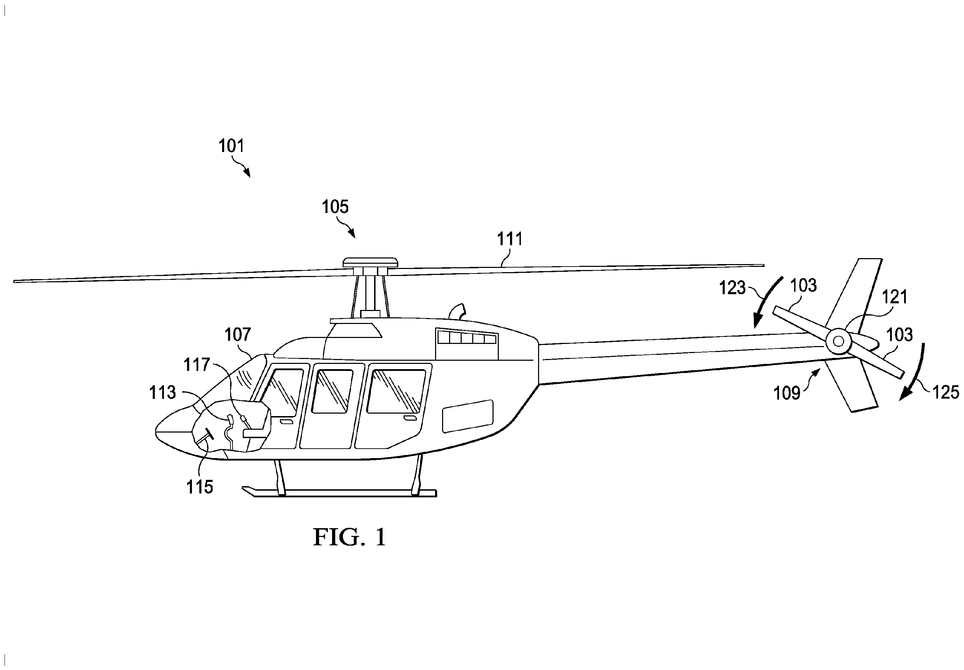

Figure 1 illustrates a rotorcraft 101 equipped with a bidirectional rotor blade 103 according to this disclosure. Rotorcraft 101 comprises a main rotor system 105 carried by a fuselage 107 and a tail rotor system 109 carried by the fuselage 107. One or more main-rotor blades 111 operably associated with main rotor system 105 provide lift for rotorcraft 101 and are controlled with a plurality of control sticks within the fuselage 107. For example, during flight a pilot can manipulate cyclic stick 113 to cyclically change the pitch angle of main rotor blades 111, thus providing lateral and longitudinal flight direction, and/or manipulate pedals 115 for controlling yaw direction with varied RPM and rotational direction of the tail rotor system. Furthermore, the pilot can adjust the collective stick 117 to collectively change the pitch angles of all the main-rotor blades 111.

Tail rotor system 109 utilizes a bidirectional aircraft rotor blade 103 having a fixed pitch and configured for producing a yaw moment of a selected magnitude and a selective direction. Because the bidirectional aircraft rotor blade 103 is fixed in pitch, the RPM and the direction of rotation are varied by manipulation of the pedals 115 to vary the magnitude and direction of the yaw moment. Rotorcraft 101 features a torque source, such as an engine or electric motor, driving the main rotor system 105 along with the tail rotor system 109. Tail rotor system 109 can be rotationally coupled to a transmission comprising a clutch that enables the tail rotor system 109 to both vary the RPM and the rotational direction of the tail rotor system 109. Alternatively, the tail rotor system 109 is driven by a dedicated bidirectional electric motor. In either case, the bidirectional aircraft rotor blade 103 is affixed to a hub 121.

The bidirectional aircraft rotor blade 103 is comprised of a leading edge that is identical to a trailing edge, both having identical rounded edge profiles. Furthermore, the bidirectional aircraft rotor blade 103 is comprised of an upper surface having a greater upper camber as compared to a lower camber of the lower surface. The combination of the camber and fixed pitch make the bidirectional rotor blade 103 efficient in a forward direction 123, but results in the bidirectional aircraft rotor blade 103 being less efficient in a reverse direction 125.

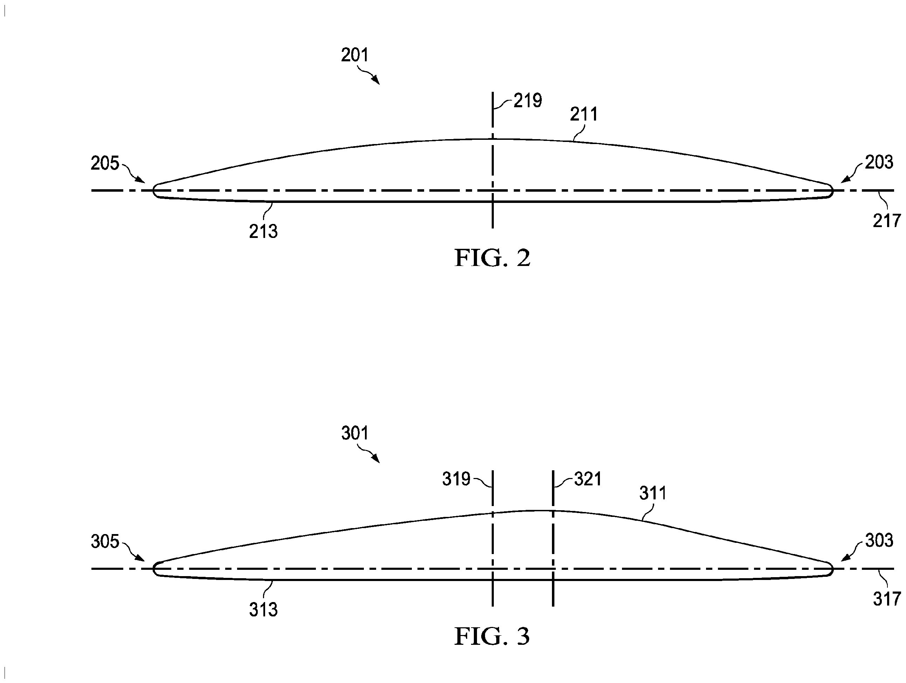

Figure 2 illustrates a bidirectional aircraft rotor blade 201 for a rotorcraft. Rotor blade 201 is comprised of a leading edge 203, a trailing edge 205, an upper surface 211, and a lower surface 213. Chord axis 217 connects the leading edge 203 and the trailing edge 205. The median axis 219 is located midway along the chord axis between the leading edge 203 and the trailing edge 205. The upper surface 211 connects the leading edge 203 to the trailing edge 205, and the lower surface 213 connects the leading edge 203 to the trailing edge 205.

A thickness of the rotor blade 201 is at its maximum at the median axis 219. Furthermore, the leading edge 203 and the trailing edge 205 are identical in profile shape, and the rotor blade 201 is mirrored about the median axis. Placing the maximum thickness position at 50% of the chord length makes the rotor blade symmetric about the median axis 219, which provides reverse direction performance. In a preferred embodiment, the lower camber is at or below 2% to help reverse direction performance.

Figure 3 illustrates a rotor blade (301) not falling within the scope of the claimed invention. Rotor blade 301 is comprised of a leading edge 303, a trailing edge 305, an upper surface 311, and a lower surface 313. Chord axis 317 connects the leading edge 303 and the trailing edge 305. A median axis 319 is located midway between the leading edge 303 and the trailing edge 305. The upper surface 311 connects the leading edge 303 to the trailing edge 305, and the lower surface 313 connects the leading edge 303 to the trailing edge 305.

A maximum thickness axis 321 is located where a thickness of the rotor blade 301 is at a maximum, and the axis 321 is located a distance away from the median axis 319, resulting in the rotor blade 301 being non-symmetric about the median axis 319. The leading edge 303 and the trailing edge 305 are identical in profile shape.

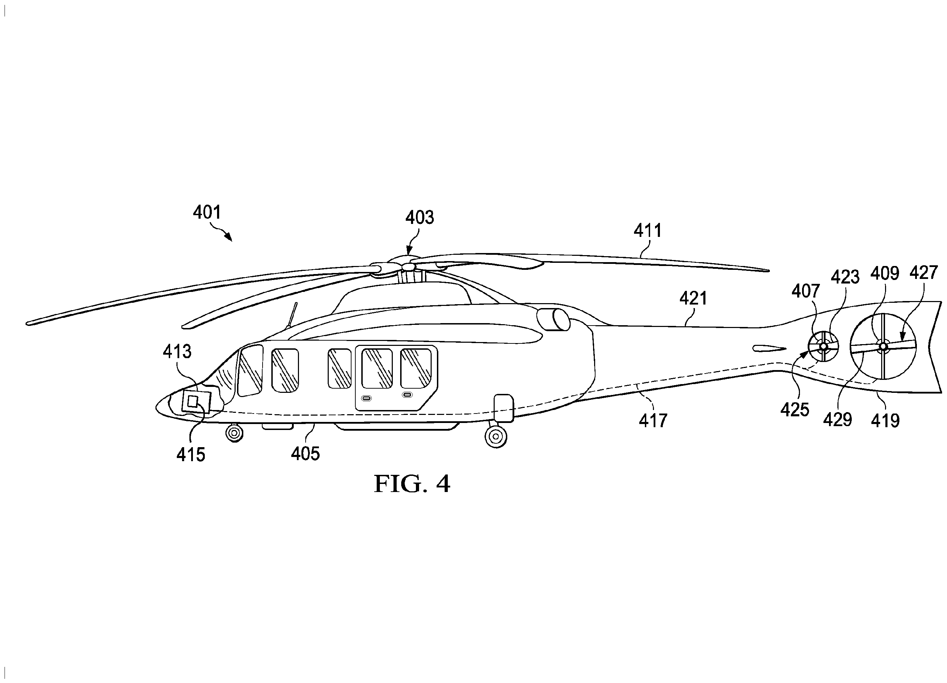

Figure 4 illustrates a rotorcraft 401 equipped with two bidirectional rotor systems according to this disclosure. Rotorcraft 401 comprises a main rotor system 403 carried by a fuselage 405, a first tail rotor system 407, and a second tail rotor system 409. One or more main-rotor blades 411 operably associated with main rotor system 403 provide lift for rotorcraft 401 and are controlled with a flight control computer 413 having a tail rotor controller 415. For example, during flight a pilot can manipulate a cyclic stick to cyclically change the pitch angle of main rotor blades 411, thus providing lateral and longitudinal flight direction, and/or manipulate pedals for controlling yaw direction by varying the RPM and reversing the direction of the first and second tail rotor systems 407, 409. The pilot can adjust a collective stick to collectively change the pitch angles of all of the main rotor blades 411.

The flight control computer 413 and the tail rotor controller 415 are wired 417 to the first tail rotor system 407 and wired to the second tail rotor system 409. Both the first tail rotor system 407 the second tail rotor system 409 are in the tail rotor assembly 419. The tail rotor assembly 419 of rotorcraft 401 is attached to the fuselage 405 of the rotorcraft 401 by tail boom 421. The first tail rotor system 407 is comprised of a first tail rotor blade 423 and a second tail rotor blade 425. The second tail rotor system 409 is comprised of a third tail rotor blade 427 and a fourth tail rotor blade 429. The flight control computer 413 can selectively adjust the RPM of each tail rotor system and the direction of rotation of each tail rotor system to produce a yaw moment of a selected magnitude and direction for varying the yaw attitude of the rotorcraft 401.

The first tail rotor system 407 is driven by a first electric motor. A pitch of the first tail rotor blade 423 and the second tail rotor blade 425 is fixed. The RPM and/or a direction of rotation of the first electric motor is varied to vary a yaw moment of the first tail rotor system 407.

The second tail rotor system 409 is driven by a second electric motor. A pitch of the third tail rotor blade 427 and the fourth tail rotor blade 429 is fixed. The RPM and/or a direction of rotation of the first electric motor is varied to vary a yaw moment of the first tail rotor system 409.

Combining the yaw moment of the first tail rotor system 407 with the yaw moment of the second tail rotor system 409 allows the pilot to quickly and efficiently yaw the aircraft. In the preferred embodiment the first tail rotor system 407 has a smaller diameter than the second tail rotor system 409. In alternative embodiments, each tail rotor system is equal in diameter or first tail rotor system 407 has a larger diameter than the second tail rotor system 409.

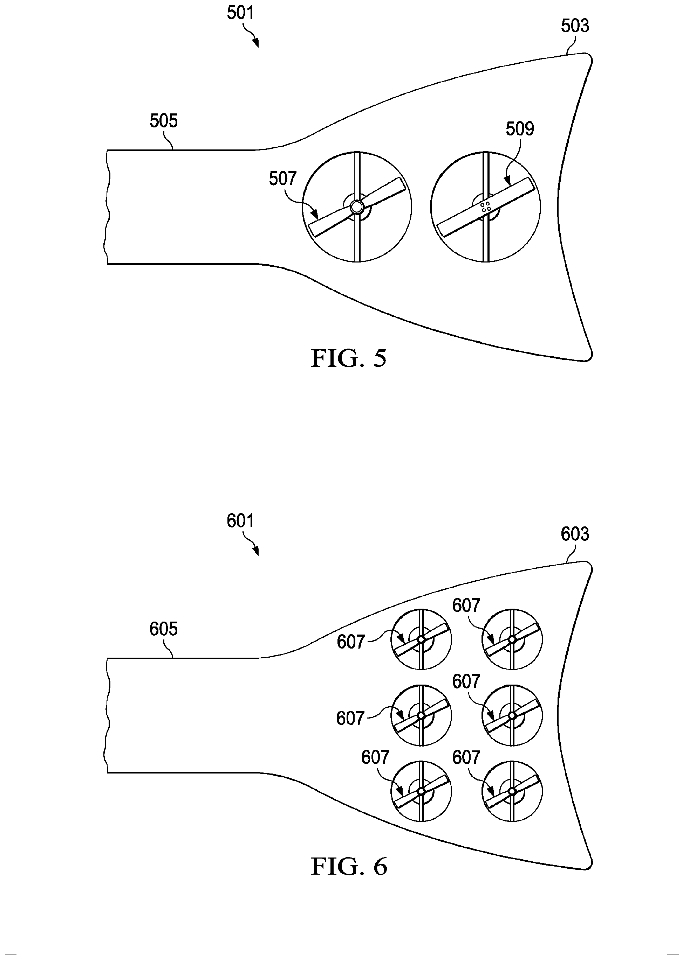

Figure 5 illustrates a rotorcraft's tail boom equipped with two tail rotors having bidirectional aircraft rotor blades according to this disclosure. Combined tail rotor system 501 is in a vertical stabilizer 503 attached to tail boom 505. Combined tail rotor system 501 is comprised of a first tail rotor system 507 and second tail rotor system 509 of equal diameter. Each tail rotor system in the combined tail rotor system 501 is fixed in pitch and features bidirectional aircraft rotor blades like those of the bidirectional aircraft rotor 301. Second tail rotor system 509 is comprised of a single blade that spans an entire length of the tail rotor system. In the preferred embodiment, the first tail rotor system 507 is controlled concurrently with the second tail rotor system 509. Alternatively, the first tail rotor system 507 is controlled independently of the second tail rotor system 509.

Figure 6 illustrates a rotorcraft's tail boom equipped with an array of tail rotors having bidirectional aircraft rotor blades according to this disclosure. Combined tail rotor system 601 is in a vertical stabilizer 603 attached to tail boom 605. Combined tail rotor system 601 is comprised of a plurality of tail rotor systems 607 having equal diameters. Each tail rotor system in the combined tail rotor system 601 is fixed in pitch and features bidirectional aircraft rotor blades like those of the bidirectional aircraft rotor 301.

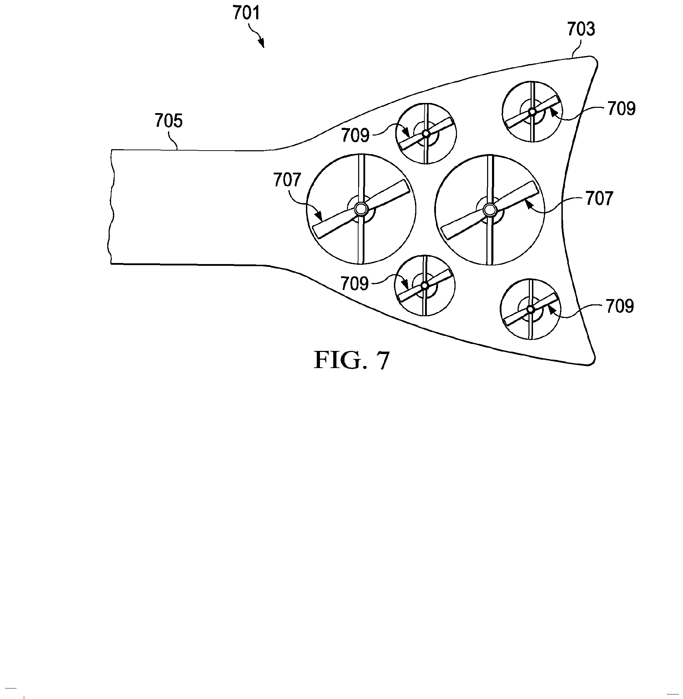

Figure 7 illustrates a rotorcraft's tail boom equipped with several tail rotors having bidirectional aircraft rotor blades according to this disclosure. Combined tail rotor system 701 is in a vertical stabilizer 703 attached to tail boom 705. Combined tail rotor system 701 is comprised of a plurality of larger tail rotor systems 707 and smaller tail rotor systems 709. Each tail rotor system 707, 709 in the combined tail rotor system 701 is fixed in pitch and features bidirectional aircraft rotor blades such as the bidirectional aircraft rotor 301. It should be apparent that tail rotor systems 707, 709 while shown as providing yaw control could be mounted horizontally to provide lift to rotorcraft.

It should be noted that the bidirectional aircraft rotor provides thrust while moving in both forward and reverse directions. The bidirectional aircraft rotor provides rotorcraft with quicker and more efficient control of yaw during flight, thereby enabling the rotorcraft to be more responsive to the pilot and the flight control system.

At least one embodiment is disclosed, and variations, combinations, and/or modifications of the embodiment(s) and/or features of the embodiment(s) made by a person having ordinary skill in the art are within the scope of this disclosure. Accordingly, the scope of protection is not limited by the description set out above but is defined by the claims that follow.

## Claims

1. A tail rotor (109) for a rotorcraft (101), comprising:
a hub (121) driven by a torque source; and
a first tail rotor blade (103, 201) affixed to the hub (121);
wherein a pitch of the first tail rotor blade (103, 201) is fixed;
wherein a profile of a leading edge (203) of the first tail rotor blade (103, 201) is identical to a profile of a trailing edge (205) of the first tail rotor blade (103, 201); and
**characterized in that**
the first tail rotor blade (103, 201) is a bidirectional tail rotor blade (103, 201) that is symmetric about a median axis (219) of the bidirectional tail rotor blade (103, 201), wherein the median axis (219) is located midway along a chord axis (217) between the leading edge (203) of the bidirectional tail rotor blade (103, 201) and the trailing edge (205) of the bidirectional tail rotor blade (103, 201), and wherein a maximum thickness of the bidirectional tail rotor blade (103, 201) is midway between the leading edge (203) and the trailing edge (205).

2. The tail rotor (407, 409) of claim 1, further comprising:
a second tail rotor blade (425) affixed to the hub.

3. The tail rotor (109) of claim 1, wherein the first tail rotor blade (103, 201) comprises an upper surface (211) and a lower surface (213), wherein the upper surface (211) has a greater camber than a camber of the lower surface (213).

4. The tail rotor (109) of claim 3, wherein:-
(i) the lower camber is less than or equal to 2 percent; and/or
(ii) a maximum of the upper camber is located where the maximum thickness is located.

5. The tail rotor (109) of claim 1 or of any of claims 2 to 4, wherein the torque source is an electric motor; or wherein the torque source is an engine.

## Patentansprüche

1. Heckrotor (109) für einen Drehflügler (101), umfassend:
eine Nabe (121), die von einer Drehmomentquelle angetrieben wird; und
ein erstes Heckrotorblatt (103, 201), das an der Nabe (121) befestigt ist;
wobei ein Anstellwinkel des ersten Heckrotorblatts (103, 201) fest ist;
wobei ein Profil einer Vorderkante (203) des ersten Heckrotorblatts (103, 201) identisch ist mit einem Profil einer Hinterkante (205) des ersten Heckrotorblatts (103, 201); und
**dadurch gekennzeichnet, dass**
das erste Heckrotorblatt (103, 201) ein bidirektionales Heckrotorblatt (103, 201) ist, das um eine Mittelachse (219) des bidirektionalen Heckrotorblatts (103, 201) symmetrisch ist, wobei sich die Mittelachse (219) entlang einer Sehnenachse (217) in der Mitte zwischen der Vorderkante (203) des bidirektionalen Heckrotorblatts (103, 201) und der Hinterkante (205) des bidirektionalen Heckrotorblatts (103, 201) befindet und wobei eine maximale Dicke des bidirektionalen Heckrotorblatts (103, 201) in der Mitte zwischen der Vorderkante (203) und der Hinterkante (205) liegt.

2. Heckrotor (407, 409) nach Anspruch 1, weiter umfassend:
ein zweites Heckrotorblatt (425), das an der Nabe befestigt ist.

3. Heckrotor (109) nach Anspruch 1, wobei das erste Heckrotorblatt (103, 201) eine obere Fläche (211) und eine untere Fläche (213) umfasst, wobei die obere Fläche (211) eine größere Wölbung aufweist als eine Wölbung der unteren Fläche (213).

4. Heckrotor (109) nach Anspruch 3, wobei: -
(i) die untere Wölbung kleiner als oder gleich 2 Prozent ist; und/oder
(ii) ein Maximum der oberen Wölbung sich dort befindet, wo sich die maximale Dicke befindet.

5. Heckrotor (109) nach Anspruch 1 oder nach einem der Ansprüche 2 bis 4, wobei die Drehmomentquelle ein Elektromotor ist; oder wobei die Drehmomentquelle ein Verbrennungsmotor ist.

## Revendications

1. Rotor de queue (109) pour un giravion (101), comprenant :
un moyeu (121) entraîné par une source de couple ; et
une première pale de rotor de queue (103, 201) fixée au moyeu (121) ;
dans lequel un pas de la première pale de rotor de queue (103, 201) est fixe ;
dans lequel un profil d'un bord d'attaque (203) de la première pale de rotor de queue (103, 201) est identique à un profil d'un bord de fuite (205) de la première pale de rotor de queue (103, 201) ; et
**caractérisé en ce que**
la première pale de rotor de queue (103, 201) est une pale de rotor de queue bidirectionnelle (103, 201) qui est symétrique autour d'un axe médian (219) de la pale de rotor de queue bidirectionnelle (103, 201), dans lequel l'axe médian (219) est situé à mi-chemin le long d'un axe de corde (217) entre le bord d'attaque (203) de la pale de rotor de queue bidirectionnelle (103, 201) et le bord de fuite (205) de la pale de rotor de queue bidirectionnelle (103, 201), et dans lequel une épaisseur maximale de la pale de rotor de queue bidirectionnelle (103, 201) est à mi-chemin entre le bord d'attaque (203) et le bord de fuite (205).

2. Rotor de queue (407, 409) selon la revendication 1, comprenant en outre :
une seconde pale de rotor de queue (425) fixée au moyeu.

3. Rotor de queue (109) selon la revendication 1, dans lequel la première pale de rotor de queue (103, 201) comprend une surface supérieure (211) et une surface inférieure (213), dans lequel la surface supérieure (211) présente une cambrure supérieure à une cambrure de la surface inférieure (213).

4. Rotor de queue (109) selon la revendication 3, dans lequel :
(i) la cambrure inférieure est inférieure ou égale à 2 pour cent ; et/ou
(ii) un maximum de la cambrure supérieure est situé là où est située l'épaisseur maximale.

5. Rotor de queue (109) selon la revendication 1 ou l'une quelconque des revendications 2 à 4, dans lequel la source de couple est un moteur électrique ; ou dans lequel la source de couple est un moteur.
